# EUROPEAN PATENT APPLICATION

(11) **EP 0 565 193 A1**
(43) Date of publication of application: **13.10.1993**
(21) Application number: 93201003.6
(22) Date of filing: 06.04.1993
(51) Int. Cl.: F16D 55/14

(54) **Wedge-operated ball brake**

(30) Priority: 10.04.1992 IT MI920877
(71) Applicant: SIRMAC OFFICINE MECCANICHE S.p.A., I-40010 Calcara Bologna (IT)
(72) Inventor: Venturi, Giancarlo, I-40050 Monte S. Pietro (Bologna) (IT)
(74) Representative: Faraggiana, Vittorio, Dr. Ing.

(57) **Abstract**

A brake (10) for motor-vehicles, of the ball (13) and ramp (14) type, comprises two faced plates (11, 12) controlling the pressure of the braking discs (21, 22) on their moving apart from each other, by acting on wings (16, 17) for rotation of the plates, so as to move the balls (13) along the ramp seatings (14). For moving apart of the wings (16, 17), an operating element (27) is put between them, which element is connected to a tie rod (34) to be movable in a direction substantially radial to the plates between a rest position inwards of the plates and an operating or braking position outwards of the plates. Sloping slide surfaces (28, 29, 30, 31) between the wings (16, 17) and the operating element (27) produce moving apart of the wings on movement of the element (27) towards its operating position by drawing of the tie rod (34).

Advantageously, rolling elements such as balls (32, 33) may be interposed between the slide surfaces.

## Description

In braking system engineering for motor-vehicles the so-called "ramp and ball" brakes are known, in which two plates are disposed in faced relationship and balls housed in seatings formed in the plates and having decreasing depth in the circumferential direction are interposed therebetween.

Kinematic mechanisms for driving the brake in operation cause the relative rotation of the two plates so that the balls by running in the seatings towards areas of lower depth move the plates away from each other thereby bringing about the compression of braking discs located at the outer faces of the plates. In the known art several different types of kinematic mechanisms for rotation of the plates under hydraulic, merely mechanical or combined action are known. For actuation, a toggle linkage is often used in which two rods are each connected, at one end thereof, to a wing radially projecting from one of the plates, at circumferentially offset positions.

At their opposite ends said rods are joined together and pivotally connected to an actuating tie rod. Drawing of the tie rod thus causes the closure of the angle between the rods and the rotation of the plates.

Such a mechanism however suffers from several drawbacks, such as a rather important bulkiness, especially radially to the plates, and a great variation in efficiency depending on the temporary distance between the rod-fastening wings. The last mentioned disadvantage is particularly important since actuation of the brake becomes of reduced efficiency just towards the end of the stroke, that is when a maximum braking action is required.

In addition a reduction in efficiency also occurs if the mere taking up of the play caused by the increasing wear of the braking discs is effected, being said taking up carried out by rotating the plates to a greater extent relative to each other in their position of non-actuation of the brake.

The general object of the present invention is to obviate the above mentioned drawbacks by providing a ball brake having a driving mechanism of minimum bulkiness and offering a substantially constant efficiency over the whole actuation stroke.

In view of the above object, in accordance with the invention a brake for motor-vehicles has been envisaged which comprises two faced plates controlling the pressure of the braking discs on their moving apart from each other, balls housed in ramp-seatings being interposed between said plates, each plate being provided with a radially-projecting rotation wing, operating means interposed between the wings causing, on operation, the mutual movement of the wings for rotation of the plates in opposite ways and moving apart of said plates by displacement of the balls along their ramp-seatings, characterized in that the operating means intermediate the wings comprises an operating element connected to a tie rod to be movable in a direction substantially radial to the plates between a rest position inwards of the plates and an operating or braking position outwards of the plates, sloping slide surfaces between the wings and the operating element producing the spacing apart of the wings on movement of the element towards its operating position by drawing of the tie rod.

For better understanding of the innovatory principles and advantages of the present invention as compared to the known art, possible embodiments putting into practice said principles will be described hereinafter by way of non-limiting examples with the aid of the accompanying drawings, in which:
- Fig. 1 is a diagrammatic front view of a ball brake the actuation of which is in accordance with the invention;
- Fig. 2 is a view taken along line II-II in Fig. 1;
- Fig. 3 is a partial view of one possible alternative actuation of the ball brake shown in Fig. 1;
- Fig. 4 is a partial view of a second possible alternative actuation of the ball brake shown in Fig. 1;
- Fig. 5 is a partial view of a third possible alternative actuation of the ball brake shown in fig. 1.

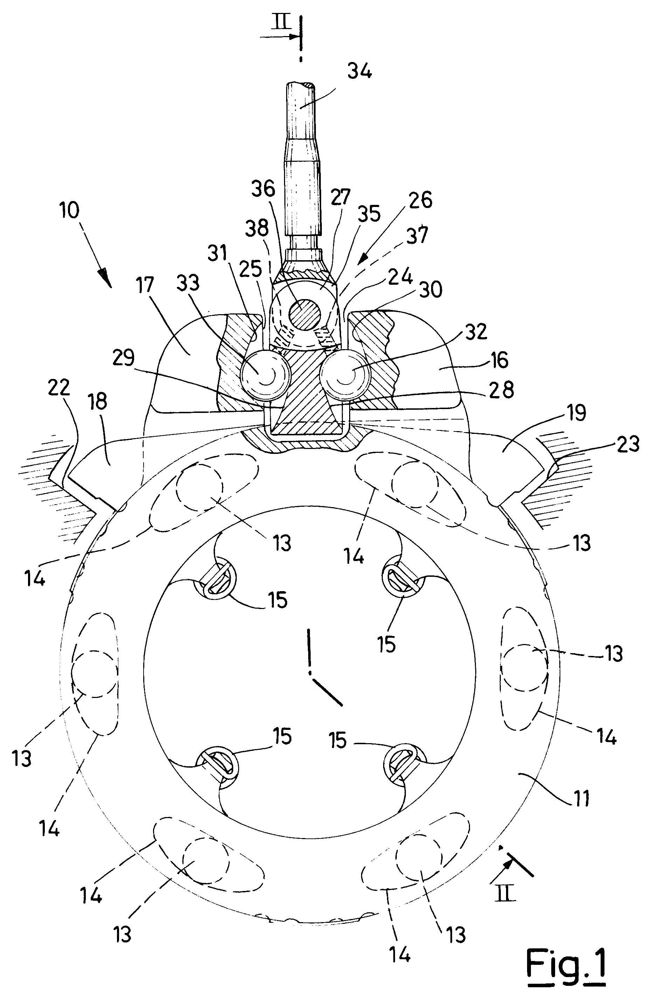

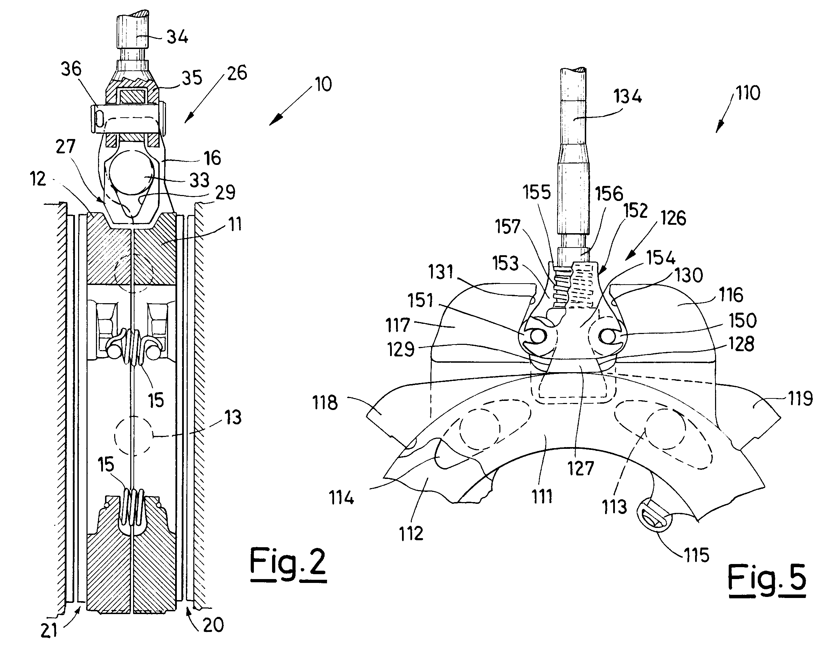

Referring to the drawings, shown in Fig. 1 is a brake generally identified by reference numeral 10, in which the braking ball portion, being substantially of known art, is shown only diagrammatically for better understanding of the invention as a whole. In particular, the braking part, as also shown in Fig. 2, comprises two plates 11, 12 facing each other between which balls 13 are interposed, which balls are received in seatings or ramps 14 formed in the facing surfaces of the plates and being of decreasing depth. The plates are maintained close to each other by means of springs located intermediate them. An operating wing, 16 and 17 and an abutment wing 18, 19 respectively, project radially from each plate 11, 12. In this way, on mutual moving apart of the operating wings 16, 17 the balls run in the seatings going to positions of lower depth and thereby moving the plates away from each other.

As viewed from Fig. 2, this results in the compression of the braking discs or disc packs 20, 21, that thereby perform a braking action. During the braking, the excessive rotation of the plates is prevented, depending on the rotation direction of the axles to be braked, by the abutment wing 18 or 19 resting against a corresponding locating element 22 or 23 integral with the brake support.

Up to now particulars of elements substantially of known art have been described which are used in brakes of the ball and ramp type, easily conceivable by a person of ordinary skill in the art and therefore sufficient to enable comprehension of the structure and operation of the brake herein claimed.

In accordance with the invention, the operating wings 16 and 17 exhibit faced surfaces 24, 25 between which an innovatory kinematic drive mechanism 26 is received. The kinematic mechanism 26 comprises a wedge-shaped element 27 provided with two cam seatings 28, 29 facing corresponding cam seatings 30, 31 formed on surfaces 24, 25 of the operating wings respectively. Two balls 32, 33 are received between the faced seatings. As clearly shown in Fig. 1, the seatings on the wedge-shaped element decrease in depth in the radial direction inwards of the plates, whereas the seatings on the wings decrease in depth in the radial direction outwards of the plates. As visible in Fig. 2, the seatings for the balls 32, 33 are advantageously made transversely and form a bend the shape of which matches that of the balls, thereby affording a side guide to the same.

Thanks to the pressure of the springs 15 tending to maintain the plates close to each other and therefore the operating wings in an approached relationship, the kinematic mechanism 26 will tend to keep the position shown in Fig. 1, in which the wedge is radially forced towards the plate axis.

Advantageously, the seatings 28, 29, 30, 31 are so shaped that the end portion of greatest depth exhibits a spheric bend for corresponding in shape to the surface of the balls and constitute a stop to the inward movement of the wedge.

For operation of the brake, the wedge 27 is pivoted at 36 to a tie rod 34, by means of a fork 35, for enabling its being drawn in a substantially radial direction towards the external part of the plates. On drawing of the tie rod, the wedge moves and the balls 32, 33 occupy a position of lower depth in the respective seatings, moving the operating wings apart and thus actuating the brake.

Although on release of the tie rod the balls 32, 33 automatically return to the rest position, in order to facilitate their return, above all in the presence of vibrations, springs 37, 38 may advantageously be provided.

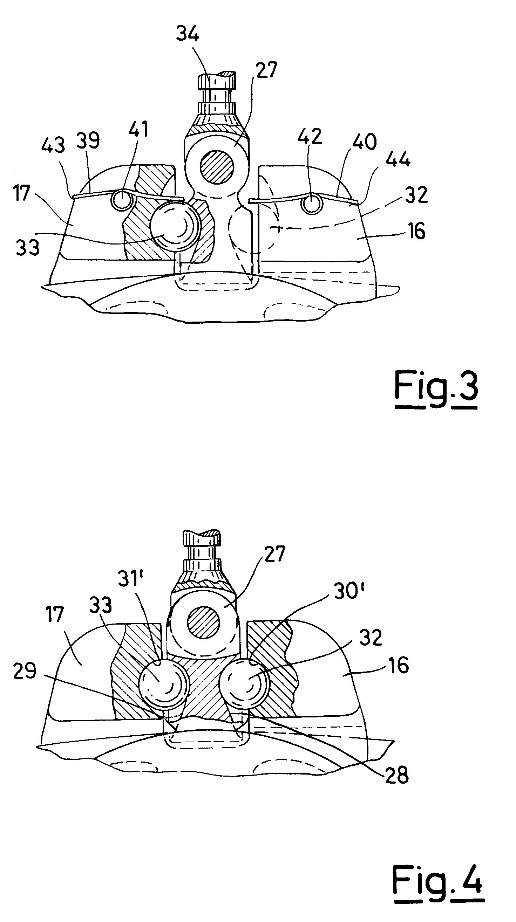

Said springs are received in seatings provided in the wedge for exerting pressure on the balls. Alternatively, as shown in Fig. 3, provision may he made for thrust leaf springs 39, 40 mounted to pivot pins 41, 42 projecting from the wings 16, 17, so as to react on wing steps 43, 44.

The presence of opposite sloping seatings for each ball enables a satisfactory degree of rotation to be achieved by the plates in response to small axial displacements of the tie rod. Shown in Fig. 4 is a possible alternative embodiment applicable when the angular displacement produced by a one surface alone is deemed as satisfactory.

As can be viewed from said figure, the balls 32 and 33 are received in respective matching seatings 30' 31' provided in the wings 16, 17 so that they can run along the sloping surfaces 28, 29 of the wedge 27.

Shown in Fig. 5 is an alternative solution for the kinematic drive mechanism still applying the principles herein claimed.

For the sake of simplicity, elements similar to those shown in Fig. 1 shall be allocated the same reference numeral as in said figure, to which however number one is put ahead.

Therefore, there is a braking part consisting of two facing plates 111, 112 between which balls 113 are interposed, which balls are received in seatings or ramps 114 formed in the facing surfaces of the plates with decreasing depth.

Projecting radially from each plate 111, 112 is one abutment wing 118, 119 and one operating wing 116, 117, respectively, By moving said wings apart, against the action of springs 115, the compression of the braking surfaces is achieved, in the same manner as shown in the embodiment in Fig. 1.

A kinematic drive mechanism 126 is located between the operating wings, which consists of a wedge-shaped element 127 the side walls 128, 129 of which facing the operating wings are inclined with a slope diverging towards the plate center so as to form slide ramps for rollers 150, 151.

A frame 152 is provided generally in the form of an inverted U the facing walls 153, 154 of which support the pins of the rollers that are snap-fitted in appropriate slots for example.

The base 155 of the U-shaped frame is provided with a hole so that it can be slidably passed through by a shank 156 connecting the wedge-shaped element 127 to an operating tie rod 134. Fitted on the shank 156 is a spring 157 reacting between the wedge and the base of the U-shaped frame.

As clearly shown in the figure, the sloping wedge walls terminate with seatings conforming in shape to the cylindrical surface of the rollers, so as to constitute stroke end for the rollers preventing further sliding outwards of the plates.

Opposite the inclined walls 128, 129, the operating wings have a surface in the form of an inclined plane 130, 131 with inclination in the opposite direction with respect to the sloping wedge walls and are provided with a seating inwards of the plates the shape of which matches that of the roller bend. Thus, in a rest condition, the rollers can be located, as shown in the figure, in the matching seatings of the wings and wedge. When the tie rod 134 is drawn, the wedge moves towards the external part of the plates and the rollers move along the inclined planes, the U-shaped frame sliding on the shank 156 against the action of the spring 157 so that the operating wings are urged to move away from each other and the braking part is operated by mutual moving apart of the plates.

At this point it is apparent that the intended purposes are achieved. The bulkiness of the kinematic drive mechanism is very reduced and substantially it is only due to the projection of the operating wings. Actuation being caused by slidings on inclined planes, the efficiency of the mechanism is constant as it does no longer depend on the degree of actuation of the brake or the adjustment of the plates for taking up of play. In addition, since the kinematic mechanism is of simple construction, it has high stoutness and duration in time and the actuation by simple traction is very convenient for arranging the actuation connections, by means of flexible sheathed steel cables for example.

It will be understood that the foregoing description of the preferred embodiments of the present invention is given for the purpose of illustrating the innovatory principles herein applied and therefore must not be considered as a limitation of the scope of the invention as claimed in the appended claims. For example, as already said, the structure of the braking part could be made in a different manner, as well known to a technician.

## Claims

1. A brake for motor-vehicles comprising two faced plates controlling the pressure of the braking discs on their moving apart from each other, balls housed in ramp-seatings being interposed between said plates, each plate being provided with a radially-projecting rotation wing, operating means interposed between the wings causing, on operation, the mutual movement of the wings for rotation of the plates in opposite ways and moving apart of said plates by displacement of the balls along their ramp-seatings, characterized in that the operating means intermediate the wings comprises an operating element connected to a tie rod to be movable in a direction substantially radial to the plates between a rest position inwards of the plates and an operating or braking position outwards of the plates, sloping slide surfaces between the wings and the operating element producing the spacing apart of the wings on movement of the element towards its operating position by drawing of the tie rod.

2. A brake according to claim 1, characterized in that the sloping surfaces are located on side walls of the operating element facing the wings.

3. A brake according to claim 1, characterized in that rolling means for sliding on the inclined surfaces are interposed between the wings and the operating element.

4. A brake according to claim 2, characterized in that the wings have slide surfaces facing the operating element which are inclined in the opposite direction with respect to the side walls of said element.

5. A brake according to claim 3, characterized in that the rolling means comprises a pair of balls received in seatings of varying depth forming said sloping surfaces.

6. A brake according to claim 2; characterized in that the rolling means is partly received in containing seatings matching their shape.

7. A brake according to claim 3, characterized in that the rolling means comprises a pair of rollers.

8. A brake according to claim 7, characterized in that the rollers are pivotally supported on the operating element by a frame sliding axially to the element.

9. A brake according to claim 8, characterized in that a spring is located intermediate the frame and the operating element, which spring enables the frame to be elastically supported by the element in a direction substantially radial to the plates.

10. A brake according to claim 9, characterized in that the spring urges the frame outwardly of the plates.

11. A brake according to claim 4, characterized in that the sloping slide surfaces terminate at one end with a limit seating receiving the rolling means for stopping further movement of said means inwardly of the plates when the operating element is in its rest position.

12. A brake according to claim 11, characterized in that spring means enabling a yielding thrust of the rolling means against their limit seatings is present.

13. A brake according to claim 12, characterized in that for each rolling means, the spring means comprises a spring located in a seating of the operating element and designed to act on the rolling means.

14. A brake according to claim 12, characterized in that for each rolling means, the spring means comprises a leaf spring pivotally mounted to the centre of a wing and having one end reacting against said wing, the opposite end acting on the respective rolling means.

15. A brake according to claim 5, characterized in that the seatings of varying depth are made transversely and exhibit a bend conforming in shape to the shape of the balls so as to form a side guide for said balls.
